# EUROPÄISCHE PATENTANMELDUNG

(11) **EP 2 180 261 A2**
(43) Veröffentlichungstag der Anmeldung: **28.04.2010**
(21) Anmeldenummer: 09012955.2
(22) Anmeldetag: 14.10.2009
(51) Int. Cl.: F24D 3/10, F24D 11/00, F24D 12/00

(54) **Hydraulische Anbindung für Kraft-Wärme-Kopplungsanlagen**

(30) Priorität: 21.10.2008 DE 102008052558; 25.03.2009 AT 4802009
(71) Anmelder: Vaillant GmbH, 42859 Remscheid (DE)
(72) Erfinder: Noll, Wolfgang, 42113 Wuppertal (DE); Paulus, Jochen, 42655 Solingen (DE)
(74) Vertreter: Hocker, Thomas

(57) **Zusammenfassung**

Anordnung zur Anbindung einer Kraft-Wärme-Kopplungsanlage, insbesondere einer Mikro-Kraft-Wärme-Kopplungsanlage, mit einem Kühlkreislauf bestehend aus einem Kühlmittelvorlauf und einem Kühlmittelrücklauf, in einem Gebäudeheizungssystem mit einem Speicher, wobei die Anordnung aus einer hydraulischen Schnittstelle, angeordnet zwischen dem Kühlkreislauf der Kraft-Wärme-Kopplungsanlage und dem Speicher des Heizungssystems, besteht.

## Beschreibung

Die Erfindung bezieht sich auf eine Anordnung zur hydraulischen Anbindung einer Kraft-Wärme-Kopplungsanlage (KWK), insbesondere einer Mikro-Kraft-Wärme-Kopplungsanlage (Mikro-KWK), in ein Heizungssystem.

Eine mit Kraft-Wärme-Kopplung betriebene Energiewandlungsanlage wandelt die chemische Energie eines Brennstoffs in Strom und Wärme um. Zunehmend finden so genannte Mikro-KWK-Anlagen Einsatz in Einfamilienhäusern, Wohngebäuden, kleineren Gewerbebetrieben und Hotels. Solche Mikro-KWK-Anlagen verwenden beispielsweise Brennstoffzellen oder Verbrennungskraftmaschinen mit interner oder externer Verbrennung für die Erzeugung der elektrischen Energie.

In der DE 600 20 484 T2 wird vorgeschlagen, dass das durch den Motor erwärmte Kühlmittel aus dem Gerät geführt wird und in einem Heizungspufferspeicher abgekühlt wird. Diese Anordnung erlaubt jedoch eine Regelung der Rücklauftemperatur des Kühlmittels nicht.

In der Druckschrift DE 34 16 574 wird eine Anordnung beschriebenen, in der hydraulische Komponente eines Gebäudes in einer hydraulischen Box mit eigenem Gehäuse zusammengefasst werden. Ob das Kühlmittel eines Blockheizkraftwerks in diese Einheit geleitet wird, kann dieser Schrift nicht entnommen werden. Das Bereitstellen einer konstanten Rücklauftemperatur für den Wärmeerzeuger wird mit der dargestellten Anordnung nicht gewährleistet.

Die DE 201 03 062 betrifft eine Verteilerstation für Heizungs- und Wasserversorgungsanlagen. Die Möglichkeit eines Anschlusses einer KWK-Einheit und eine konstante Regelung oder Einhaltung der Rücklauftemperatur des Kühlmittels mit einer externen hydraulischen Anschlussbox wird nicht beschrieben.

Die DE 195 35 752 beschreibt ein Gebäudeenergiemanagementsystem unter Verwendung einer KWK-Einheit, wobei die wesentlichen Bestandteile dieses System örtlich gemeinsam angeordnet sein sollen, um Wärmeverluste zu vermeiden. Eine gemeinsame Anordnung der Komponenten stellt jedoch dem KWK-System keine konstante, regelbare Rücklauftemperatur des Kühlmittels zur Verfügung.

Der Erfindung liegt die Aufgabe zugrunde, eine Anordnung zur hydraulischen Anbindung einer Kraft-Wärme-Kopplungsanlage, insbesondere einer Mikro-Kraft-Wärme-Kopplungsanlage mit einem Gebäudeheizungssystem zur Verfügung zu stellen, die universell einsetzbar ist.

Erfindungsgemäß wird dies gemäß den Merkmalen des Anspruchs 1 dadurch erreicht, dass die Anordnung zur Anbindung einer Kraft-Wärme-Kopplungsanlage, insbesondere einer Mikro-Kraft-Wärme-Kopplungsanlage, mit einem Kühlkreislauf bestehend aus einem Kühlmittelvorlauf und einem Kühlmittelrücklauf, in einem Gebäudeheizungssystem mit einem Speicher aus einer hydraulischen Schnittstelle, angeordnet zwischen dem Kühlkreislauf der Kraft-Wärme-Kopplungsanlage und dem Speicher des Heizungssystems, besteht.

Mit der erfindungsgemäßen Anordnung können verschiedene Energiewandlungstechniken in der Mikro-KWK-Anlage Verwendung finden, ohne dass diese Anordnung - die als externe hydraulische Schnittstelle zwischen dem internen Kühlkreislauf der Mikro-KWK-Anlage und dem Heizungssystem fungiert - entscheidend verändert werden muss.

Des Weiteren wird durch die erfindungsgemäße Anordnung der Einsatz bestimmter Energiewandlungstechniken in der Mikro-KWK-Anlage unterstützt, in dem die hydraulische Schnittstelle der Mikro-KWK-Anlage eine konstante Rücklauftemperatur des Kühlmittels bereitstellt und/oder das Kühlmittel fördert. Die hydraulische Schnittstelle stellt auch sicher, dass der maximale Volumenstrom des Kühlmittels nicht überschritten und eine konstante Temperaturdifferenz zwischen Vor- und Rücklauf der Mikro-KWK-Anlage eingestellt wird.

Vorteilhafte Ausgestaltungen ergeben sich durch die Merkmale der abhängigen Ansprüche.

Bei der erfindungsgemäßen Anordnung wird das Kühlmittel des Mikro-KWK-Systems nach außen geführt, so dass die Wärme an den Heizkreis oder an das hydraulische System des Gebäudes in der hydraulischen Schnittstelle abgegeben wird. Mit der Wärmeauskopplung der Abwärme des Energiewandlers aus der Mikro-KWK-Anlage und deren Übertragung auf das Heizungssystem des Gebäudes kann diese Abwärme insbesondere für Heizzwecke sowie für Prozess- und die Brauchwassererwärmung genutzt werden.

Die hydraulische Schnittstelle übernimmt regelungstechnische Aufgaben, wie z.B. das Bereitstellen einer Rücklauftemperatur des Kühlmittels der KWK-Einheit auf ein einstellbares, aber konstantes Niveau. Somit befindet sich eine solche Regelung außerhalb der eigentlichen KWK-Einheit und das Regelmodul ermöglicht den Anschluss von weiteren hydraulischen Versorgungsleitungen des Gebäudes.

Die Erfindung wird nun anhand der Figuren detailliert erläutert. Hierbei zeigen
- Figur 1: eine schematisch dargestellte Kraft-Wärme-Kopplungsanlage,
- Figur 2: die erfindungsgemäße Anordnung der hydraulischen Schnittstelle zwischen der Kraft-Wärme-Kopplungsanlage und des Speichers des Heizungssystems und
- Figur 3: die Anbindung der hydraulischen Schnittstelle und der Kraft-Wärme-Kopplungsanlage.

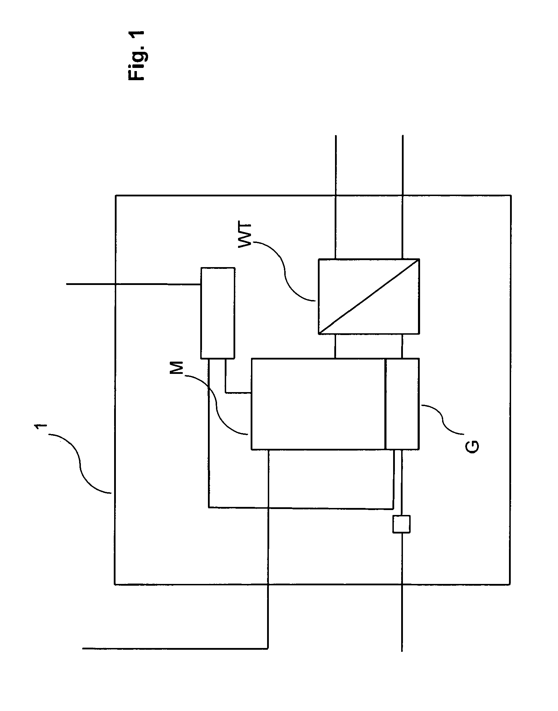

Figur 1 zeigt schematisch eine Mikro-KWK-Anlage 1 - z.B. ein Blockheizwerk (BHKW) - nach dem Stand der Technik. Dabei treibt ein Gas-Verbrennungsmotor M einen Generator G zur Stromerzeugung an. Dieser wandelt die mechanische Energie des Motors M in elektrische Energie um. Die dabei entstehende Abwärme aus dem Kühlwasser, dem Abgas des Antriebsmotors oder die Abwärme des Generators wird über mehrere Wärmetauscher ausgekoppelt.

Die Abwärme aus dem Kühlmittelkreislauf wird über den in Figur 1 dargestellten Plattenwärmetauscher WT zur Heizung und Warmwasserbereitung verwendet. Gleichzeitig ist das Blockheizwerk direkt an das lokale Stromnetz angeschlossen. So kann der erzeugte Strom entweder selbst genutzt oder eingespeist werden. Die Nutzung eines Blockheizwerks erfolgt entweder als alleiniger Wärmeerzeuger oder in Verbindung mit einem Heizkessel zur Spitzenlastabdeckung. In beiden Fällen trägt ein Pufferspeicher wesentlich zur Optimierung der Blockheizwerk-Leistung bei.

Die optimierte Nutzung der Abgaswärme trägt hierbei zur hohen Effizienz des Blockheizwerks bei. Die auf diese Weise eingesetzte Energie wird doppelt genutzt und erzielt so ein wesentlich höherer Wirkungsgrad als in Großkraftwerken.

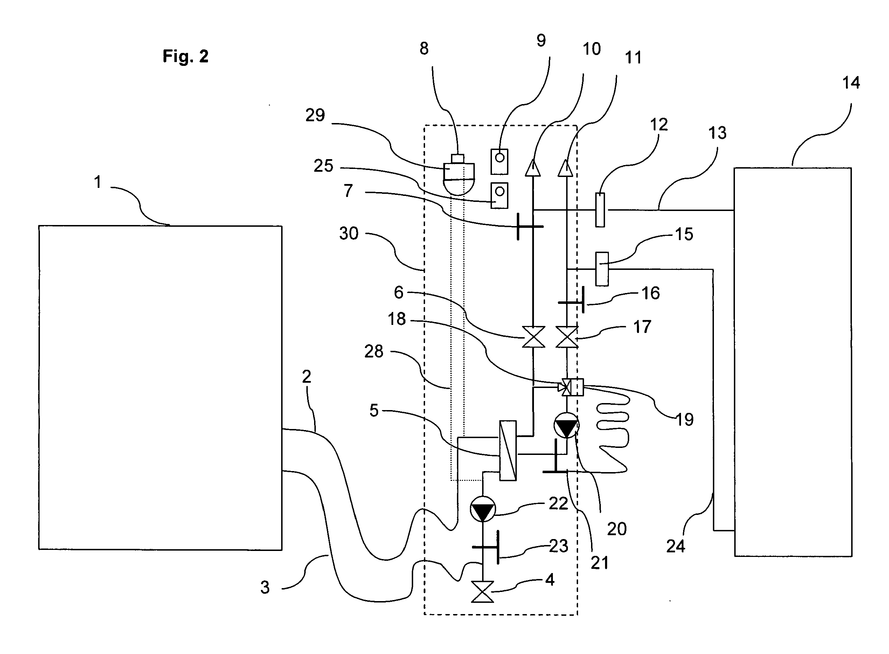

Figur 2 zeigt schematisch die erfindungsgemäße hydraulische Schnittstelle 30, angeordnet zwischen einem Kühlmittelvorlauf 2 und einem Kühlmittelrücklauf 3 der Mikro-KWK-Anlage 1 und einem Heizungswasserpufferspeicher 14 eines Heizungssystems. In dieser Schnittstelle 30 sind hydraulische Komponenten wie z.B. eine Heizkreispumpe 20, eine Kühlmittelpumpe 22 und einen Wärmetauscher 5 angeordnet, die für die Wärmeauskoppelung aus der Mikro-KWK-Anlage 1 in das Heizsystem notwendig sind. Die Heizkreispumpe 20 saugt kaltes Heizungswasser aus dem Heizungswasserpufferspeicher 14 über eine Rücklaufleitung 24 an. Dieses Heizungswasser kann je nach Betriebszustand des Heizungssystems Temperaturen zwischen 5°C und 90°C annehmen. Stromauf der Heizkreispumpe 20 wird dem Heizungswasser aus dem Rücklauf des Pufferspeichers warmem Heizungswasser aus dem Kühlmittelvorlauf 2 des Wärmeübertragers 5 entsprechend der Stellung eines Dreiwegemischventils 18 beigemischt. Der Grad der Zumischung ist dabei abhängig von der Heizungswassertemperatur stromab der Heizkreispumpe 20. Diese Temperatur ist so gewählt, dass sich bei entsprechenden Volumenströmen des Heizungswassers und des Kühlmittels eine definierte Temperatur am Ausgang des Wärmeübertragers im Rücklauf des Kühlmittels einstellt.

In einer besonders günstigen Ausführungsform sind dort auch die elektrischen Anschlüsse (9, 25) der KWK-Anlage untergebracht, die für die elektrische Integration des Mikro-KWK-Systems in das elektrische Hausnetz bzw. in das öffentliche Stromnetz benötigt werden.

Aus dem Stand der Technik ist bekannt, die Temperaturdifferenz zwischen der Vor- und Rücklauftemperatur des Heizungswassers von außen z.B. durch die Variation der Drehzahl der Heizungswasserpumpe zu regeln. Es ist auch bekannt, die Temperaturdifferenz zwischen der Vor- und Rücklauftemperatur des Kühlmittels der Mikro-KWK-Anlage entweder gar nicht oder durch interne Maßnahmen in der Mikro-KWK-Anlage z.B. durch Variation der Drehzahl der Kühlmittelpumpe zu regeln.

Bei der Verwendung eines Motor-Blockheizkraftwerks als Mikro-KWK-Anlage soll die Rücklauftemperatur des Kühlmittels konstant und oberhalb der Motoröl-Solltemperatur, gehalten werden, um Kondensationserscheinungen zu vermeiden. Eine Korrosion, verursacht durch diese Kondensation, soll vermieden werden.

Die Temperatur des Motorzylinderkopfs wird bei der erfindungsgemäßen Anordnung über einen Temperaturfühler 26 gemessen und kann zwischen 65°C und 90°C betragen. Über Temperaturfühler 23 wird die Rücklauftemperatur aus dem Blockheizkraftwerk 1 beim Start überwacht und beim Erreichen einer Solltemperatur von 65°C fungiert der Fühler 23 als Einschaltfühler für den Pumpenlauf.

Die Rücklauftemperatur aus dem Pufferspeicher 14 wird über den Temperaturfühler 16, wo Temperaturen von 5°C bis 90°C gemessen werden, überwacht. Die Temperatur wird so gewählt, dass sich bei entsprechenden Volumenströmen des Heizungswassers und des Kühlmittels eine definierte Temperatur am Ausgang des Wärmeübertragers im Rücklauf des Kühlmittels von z.B. 65°C einstellt.

Wenn die Rücklauftemperatur des Kühlmittels so eingestellt wird, dass sich über das Motor-Blockheizkraftwerk eine konstante Temperaturdifferenz einstellt, wird die Lebensdauer des Motors M begünstigt. Insbesondere vorteilhaft ist eine Temperaturdifferenz, bei der eine Vorlauf-Solltemperatur von 80°C nicht überschritten wird.

Eine konstante Rücklauftemperatur im Kühlwasserkreislauf wirkt sich ebenfalls positiv auf die Lebensdauer des Motors aus, wenn ein flüssiggekühltes Brennstoffzellensystem verwendet wird. Es ist bekannt, dass bei Hochtemperatur-PEM-Brennstoffzellensystemen kleine Temperaturdifferenzen zwischen Vor- und Rücklauf des Kühlmittels unter Lebensdauergesichtspunkten erwünscht sind.

Der Kühlwasserkreislauf der Mikro-KWK-Anlage 1 kann über die hydraulische Schnittstelle 30 befüllt und entlüftet werden, in dem das Kühlmittel in ein Ausgleichsgefäß 29 über einen Füll- - bzw. Entlüftungsschlauch 27, 28 eingefüllt bzw. entlüftet wird. Das Ausgleichsgefäß 29 weist ein Verschlussdeckel 8 mit Druckventil zur Regulierung des entstehenden Über- und Unterdrucks auf.

Der Kühlwasserkreislauf kann über einen Entleerungsventil 4 in der hydraulischen Schnittstelle 30 entleert werden. Dadurch wird die Befüllung und Entleerung von Mikro-KWK-Anlagen vereinfacht. Das Mikro-KWK-System als solches muss nicht mehr für diesen Zweck geöffnet werden.

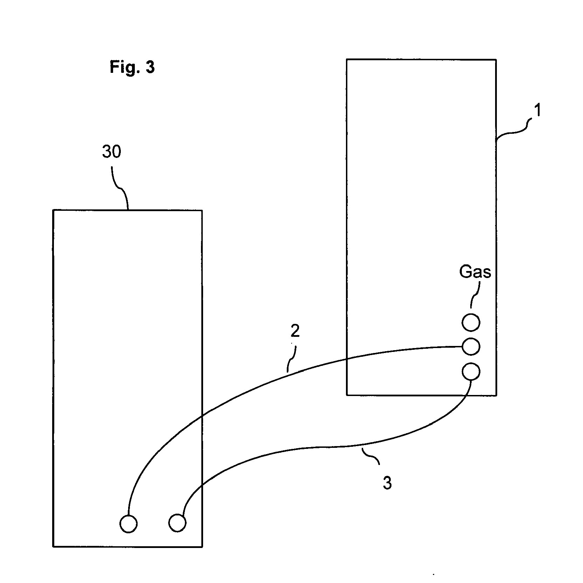

Fig. 3 zeigt schematisch die Anbindung der hydraulischen Schnittstelle 30 und der Mikro-KWK-Anlage 1. Die hydraulische Schnittstelle 30 ist einfacher zu installieren, weil alle hydraulischen Einrichtungen für die Einbindung der Mikro-KWK-Anlage 1 dort konzentriert sind. Integrationsfehler, die z.B. durch eine falsch platzierte Pumpe oder eines Ventils verursacht werden, können somit weitgehend vermieden werden.

Die hydraulische Schnittstelle 30 ermöglicht grundsätzlich den Anschluss verschiedener Mikro-KWK-Anlagen über dieselbe definierte Schnittstelle an das Heizungssystem. Dabei wird das Kühlmittel des Mikro-KWK-Systems nach außen geführt und in die hydraulische Schnittstelle geleitet, so dass die Wärme an den Heizkreis oder an das hydraulische System des Gebäudes abgegeben wird.

Des Weiteren ermöglicht die hydraulische Schnittstelle ein einfaches Einstellen und Regeln einer konstanten Rücklauftemperatur des Kühlmittelreislaufes der Mikro-KWK-Anlage. Auch das Einstellen konstanter Temperaturdifferenzen im Kühlmittelkreislauf ist über die hydraulische Schnittstelle möglich. Durch die erfindungsgemäße Anordnung ist die einfache und fehlerfreie Installation der für den Betrieb von MikroKWK-Anlagen notwendigen hydraulischen und elektrischen Komponenten sowie deren einfachere Wartung sichergestellt.

## Patentansprüche

1. Anordnung zur Anbindung einer Kraft-Wärme-Kopplungsanlage (1), insbesondere einer Mikro-Kraft-Wärme-Kopplungsanlage, mit einem Kühlkreislauf bestehend aus einem Kühlmittelvorlauf (2) und einem Kühlmittelrücklauf (3), in einem Gebäudeheizungssystem mit einem Speicher (14), **dadurch gekennzeichnet, dass** die Anordnung aus einer hydraulischen Schnittstelle (30), angeordnet zwischen dem Kühlkreislauf der Kraft-Wärme-Kopplungsanlage (1) und dem Speicher (14) des Heizungssystems, besteht.

2. Anordnung zur Anbindung einer Kraft-Wärme-Kopplungsanlage (1) nach Anspruch 1, **dadurch gekennzeichnet, dass** in der hydraulischen Schnittstelle (30) hydraulische Komponenten angeordnet sind, die für eine Wärmeauskopplung aus der Kraft-Wärme-Kopplungsanlage (1) in das Heizsystem erforderlich sind.

3. Anordnung zur Anbindung einer Kraft-Wärme-Kopplungsanlage (1) nach Anspruch 2, **dadurch gekennzeichnet, dass** in der hydraulischen Schnittstelle (30) elektrische Anschlüsse (9, 25) für den Anschluss der Kraft-Wärme-Kopplungsanlage (1) an das elektrische Hausnetz oder an das öffentliche Stromnetz angeordnet sind.

4. Anordnung zur Anbindung einer Kraft-Wärme-Kopplungsanlage (1) nach Anspruch 2, **dadurch gekennzeichnet, dass** das Kühlmittel aus dem Kühlmittelvorlauf (2) in die hydraulische Schnittstelle (30) vor der Zuführung in den Speicher (14) in einen Wärmetauscher (5) eingeleitet wird.

5. Anordnung zur Anbindung einer Kraft-Wärme-Kopplungsanlage (1) nach Anspruch 4, **dadurch gekennzeichnet, dass** eine konstante Temperatur bzw. Temperaturdifferenz zwischen dem Kühlmittelvorlauf (2) und dem Kühlmittelrücklauf (3) durch Zumischen vom Heizungswasser aus dem Kühlmittelvorlauf (2) des Wärmetauschers (5) dem Heizungswasser aus dem Rücklauf des Pufferspeichers über den Dreiwegemischventil (18) und die Temperaturfühler (19, 21 und 23) eingestellt wird.
